# EUROPÄISCHE PATENTSCHRIFT

(11) **EP 3 983 209 B1**
(45) Veröffentlichungstag und Bekanntmachung des Hinweises auf die Patenterteilung: **12.06.2024**
(21) Anmeldenummer: 20723824.7
(22) Anmeldetag: 30.04.2020
(51) Int. Cl.: B29D 30/00, B29D 30/06, G05B 19/414, G05B 19/418

(54) **REIFENAUFBAUANLAGE UND VERFAHREN ZUM AUFBAUEN EINES REIFENS**
TYRE BUILDING SYSTEM AND METHOD FOR BUILDING TYRES
INSTALLATION DE CONFECTION DE PNEUMATIQUE ET PROCÉDÉ PERMETTANT DE CONFECTIONNER UN PNEUMATIQUE

(30) Priorität: 12.06.2019 DE 102019208546
(43) Veröffentlichungstag der Anmeldung: 20.04.2022
(73) Patentinhaber: Continental Reifen Deutschland GmbH, 30175 Hannover (DE)
(72) Erfinder: MOULIOM, Herve, 30419 Hannover (DE)
(74) Vertreter: Continental Corporation
(86) Internationale Anmeldenummer: PCT/EP2020/061977
(87) Internationale Veröffentlichungsnummer: WO 2020/249301

(56) Entgegenhaltungen:
- EP-A2- 1 295 700
- WO-A1-99/09462
- WO-A2-2007/048003
- WO-A2-2018/226167
- CN-A- 102 540 997
- DE-A1-102009 010 322
- DE-A1-102011 001 559
- DE-A1-102015 224 813

## Beschreibung

Die Erfindung betrifft eine Reifenaufbauanlage gemäß dem Oberbegriff des Anspruches 1, sowie ein Verfahren zum Aufbauen eines Reifens.

Herkömmliche Reifenaufbauanlagen weisen mehrere Maschinenmodule auf, die für sich jeweils eine bestimmte Funktion im Reifenaufbauprozess erfüllen. Dementsprechend weist jedes Maschinenmodul eine bestimmte Funktionseinheit auf, die zum Umsetzen der jeweiligen Funktion zuständig ist. Beispielsweise können verschiedene Zuführeinheiten als Maschinenmodule vorgesehen sein, die als Funktionseinheiten jeweils Förderbänder oder Roboterarme aufweisen, die dafür sorgen, dass eine bestimmte Reifenaufbaukomponente dem Reifenaufbauprozess zugeführt oder innerhalb des Reifenaufbauprozesses zum nächsten Maschinenmodul in der Prozesskette transportiert wird. Als weitere Maschinenmodule der Reifenaufbauanlage kommen beispielsweise eine Reifenaufbaueinheit mit einer Reifenaufbautrommel als Funktionseinheit zum Aufbauen des Reifens aus den unterschiedlichen zugeführten Komponenten (Gürtellagen, Cordeinlagen, Lauffläche, Innenschicht, Seitenwand, Kerndraht, etc.), eine Reifenformeinheit mit einer Heizpresse als Funktionseinheit zum Vulkanisieren des Reifens. Abschließend kann eine Entnahmeeinheit mit einem Förderband oder einem Roboterarm als Funktionseinheit vorgesehen sein, um den fertiggestellten Reifen zu entnehmen.

Derartige Reifenaufbauanlagen sind bisher als Gesamteinheit konzipiert. Demnach werden die Maschinenmodule mit ihren Funktionseinheiten sowie deren Modul-Steuereinheiten beispielsweise von einer zentralen Energieversorgung mit Energie versorgt. Die Steuereinheiten der einzelnen Maschinenmodule sind dem Gesamtkonzept entsprechend irgendwo in der Reifenaufbauanlage angeordnet. Beispielsweise kann ein zentraler Schaltschrank vorgesehen sein, in dem die Steuereinheiten der einzelnen Maschinenmodule angeordnet sind, wobei diese innerhalb des Schaltschrankes untereinander vernetzt und auch zusammengefasst sein können. Die einzelnen Steuereinheiten können zudem von einer Zentral-Steuereinheit eines Zentralmoduls über Datensignale koordiniert werden. Weitere Komponenten, die dem jeweiligen Maschinenmodul zugeordnet sind, z.B. Anzeige- und Bedien-Paneele zur Steuerung der jeweiligen Funktionseinheit, sind wiederum an dem entsprechenden Maschinenmodul angeordnet. Um eine Steuerung und Bedienung der Gesamtanlage zu ermöglichen, sind die einzelnen Komponenten somit über eine Vielzahl an Modul-Datenleitungen und über Verteiler (Switch) miteinander zu verbinden.

Nachteilig ist somit, dass ein hoher Verkabelungs- und Planungsaufwand für die Verbindung und Koordinierung der einzelnen Komponenten nötig ist. Weiterhin ist auch ein hoher Aufwand für die Verteilung der Energie ausgehend von einer zentralen Energieversorgung an die Funktionseinheiten sowie die Steuereinheiten und auch weitere Komponenten der einzelnen Moduleinheiten einzuplanen. Bei einem Austausch eines einzelnen Maschinenmoduls bzw. einzelner Komponenten daraus ist zudem eine Anpassung der Reifenaufbauanlage an unterschiedlichen Positionen notwendig. Soll demnach beispielsweise ein Upgrade oder ein reparaturbedingter Austausch von einem der Maschinenmodule für die Zuführung einer bestimmten Reifenaufbaukomponente durchgeführt werden, ist die diesem Maschinenmodul zugeordnet Hardware an unterschiedlichen Stellen in der Reifenaufbauanlage zu lokalisieren, wenn möglich zu entfernen und anschließend wieder an den entsprechenden Stellen einzubauen. Dies stellt einen erheblichen Aufwand dar, da die auszutauschende Hardware verteilt in der Anlage angeordnet ist. Unter Umständen kann es auch vorkommen, dass einzelne Komponenten nicht entfernt werden können, z.B. da sie mit Komponenten anderer Maschinenmodule zusammenhängen, die eigentlich nicht ausgetauscht werden sollen.

Dementsprechend ist auch das nachträgliche Einfügen eines komplett neuen Maschinenmoduls in eine bestehende Reifenaufbauanlage sehr aufwändig. Ein Testen von derartigen neuen Maschinenmodulen bzw. neuen Funktionseinheiten in einer bestehenden Reifenaufbauanlage ist nur sehr schwierig möglich, da der Neu-Einbau und ein anschließender Ausbau nach Problemen sehr zeitaufwändig ist. Auch das Einpflegen von neuen Maschinenmodulen in bestehende Infrastrukturen auf Softwareebene ist umfangreich und zeitaufwendig.

Insgesamt kann ein solcher Austausch oder Neu-Einbau also zu einem Ausfall der gesamten Reifenaufbauanlage über einen größeren Zeitraum führen, so dass eine erneute Inbetriebnahme mit einem hohen Zeitaufwand und damit hohen Kosten durch einen Produktionsausfall der Anlage verbunden ist.

Aus der DE 10 2011 001 559 A1 ist ein Verfahren zur Herstellung eines Fahrzeugreifens bekannt mit dem ein Fahrzeugreifen in einfacher Weise hergestellt werden kann. Hierzu wird die Karkasstrommel zwischen den Zuführeinrichtungen, die bevorzugt gleiche Abmaße haben, verfahren.

Die DE 10 2009 010 322 A1 offenbart ein Verfahren und eine Vorrichtung zur Steuerung der Produktion von Reifen. Eine kürzere Prozessdurchführung wird erreicht, indem einzelne Prozessschritte mit einer zeitlichen Überschneidung durchgeführt werden.

Aus der WO 99/09462 A1 ist eine Bewegungseinheit mit einer Steuereinrichtung bekannt, die über eine Antriebseinrichtung relativ zueinander verstellbare Bauteile aufweist. Durch elektrische Verteilerschienen an den Bewegungseinheiten wird ein Verkabelungsaufwand reduziert.

Die EP 1 295 700 A2 offenbart eine Vorrichtung und ein Verfahren um ein Reifenwerk zu automatisieren. Hierzu werden Reifenbautrommeln automatisiert mit einer hohen Positioniergenauigkeit verfahren.

Aufgabe der Erfindung ist daher, eine Reifenaufbauanlage sowie ein Verfahren zum Aufbauen eines Reifens anzugeben, mit der bzw. dem eine einfache Nachrüstbarkeit bzw. Austauschbarkeit von einzelnen Komponenten gegeben ist.

Diese Aufgabe wird durch eine Reifenaufbauanlage nach Anspruch 1 sowie einem Verfahren nach dem weiteren unabhängigen Anspruch gelöst. Die Unteransprüche geben bevorzugte Weiterbildungen an.

Demnach ist eine Reifenaufbauanlage zum Aufbauen eines Reifens in mehreren Funktionsschritten vorgesehen, mit mehreren Maschinenmodulen, wobei jedes Maschinenmodul eine Funktionseinheit aufweist zum Durchführen mindestens eines Funktionsschrittes im Reifenaufbauprozess, und jedem Maschinenmodul eine Modul-Steuereinheit zugeordnet ist zum Steuern der Funktionseinheit dieses Maschinenmoduls, und einem Zentralmodul, das ausgebildet ist über Datensignale mit den Modul-Steuereinheiten der Maschinenmodule zu kommunizieren und diese anzusteuern. Erfindungsgemäß ist dabei die Modul-Steuereinheit in dem oder an dem jeweils zugeordneten Maschinenmodul angeordnet und jedem Maschinenmodul ist weiterhin eine eigene Modul-Energieversorgung zugeordnet, so dass jedes Maschinenmodul autark, insbesondere energieautark, und/oder unabhängig von den anderen Maschinenmodulen der Reifenaufbauanlage betrieben und angesteuert werden kann.

Darunter ist zu verstehen, dass jedes Maschinenmodul vorteilhafterweise unabhängig von der Funktionsfähigkeit oder dem Vorhandensein der anderen Maschinenmodule in der Reifenaufbauanlage betrieben bzw. angesteuert werden kann. Demnach ist es möglich, jedes einzelne Maschinenmodul eigenständig anzusteuern und auch dann zu betreiben, wenn eines der anderen Maschinenmodule ausgefallen ist, aus der Reifenaufbauanlage entfernt wurde oder das einzelne Maschinenmodul innerhalb der Reifenaufbauanlage getestet werden soll. Es ist lediglich eine Abstimmung der einzelnen Maschinenmodule aufeinander im Rahmen der Koordinierung der Gesamtanlage bzw. des Gesamtprozesses erforderlich. Dies erfolgt allerdings nicht dadurch, dass sich einzelne Maschinenmodule gegenseitig ansteuern. Vielmehr erfolgt eine zentralisierte Ansteuerung über das Zentralmodul.

Dadurch kann die Reifenaufbauanlage flexibler aufgebaut werden, da sich die Abläufe sowie auch die Hardware in den einzelnen Maschinenmodulen nicht gegenseitig beeinflussen. Jedes Maschinenmodul ist vielmehr eigenständig, so dass eine unabhängige Ansteuerung erfolgen kann. Weiterhin kann auch eine beliebige Anzahl unterschiedlicher Maschinenmodule miteinander kombiniert werden, so dass eine einfache Erweiterbarkeit oder eine Individualisierbarkeit gegeben ist. Die Reifenaufbauanlage kann durch die Kommunikation bzw. das unabhängige Ansteuern durch das Zentralmodul in einfacher Weise betrieben und durch das Zentralmodul koordiniert werden, wobei sich die Steuerung im Zentralmodul an die jeweils eingebundenen Maschinenmodule gezielt adaptieren kann.

Auch ein Austausch eines Maschinenmoduls ist in einfacher Weise möglich, da das Entfernen und Neueinbinden bzw. Initialisieren eines bestimmten Maschinenmoduls über das Zentralmodul einfach koordiniert werden kann, ohne die bestehenden Maschinenmodule zu beeinflussen, da diese weiterhin autark und unabhängig von den anderen Maschinenmodule angesteuert werden können und sich auch nicht gegenseitig ansteuern. Durch das Zentralmodul kann in einfacher Weise festgelegt werden, welche Aufgabe und Funktion das neue Maschinenmodul übernimmt und wie dieses in den Reifenaufbauprozess eingebunden wird. Demnach kann über das Zentralmodul gezielt und schnell das Initialisieren, Einbinden und Deaktivieren von einzelnen Maschinenmodulen koordiniert werden, vergleichbar zu einem Plug&Play-Modus in einem üblichen PC.

Dadurch reduziert sich die Zeit, in der sich die Reifenaufbauanlage im Stillstand befindet bzw. die Inbetriebnahmezeit, und damit auch der Produktionsausfall, da lediglich einzelne Maschinenmodule für sich entnommen und ausgetauscht werden können, ohne die anderen bestehenden Maschinenmodule zu beeinflussen. Das Einbinden auf Softwareebene kann durch den klar strukturierten, modularen Aufbau ebenfalls einfach und schnell erfolgen.

Bei der Inbetriebnahme einer solchen Reifenaufbauanlage kann zudem zunächst ein Teil der Reifenaufbauanlage in Betrieb genommen werden, wobei weniger relevante Bestandteile bzw. Maschinenmodule der Reifenaufbauanlage für einen Testlauf oder einen rudimentären Betrieb vorerst anderweitig ersetzt werden können, ohne dass dabei der gesamte Reifenaufbauprozess zum Erliegen kommt.

Es ist dabei vorgesehen, dass jedes Maschinenmodul eine eigene Modul-Datenschnittstelle aufweist, die einerseits, mittelbar oder unmittelbar, signalleitend mit der Modul-Steuereinheit des Maschinenmoduls verbunden ist und die andererseits über eine Modul-Datenleitung mittelbar oder unmittelbar mit einer Zentral-Datenschnittstelle des Zentralmoduls verbunden ist zum Senden und/oder Empfangen von dem jeweiligen Maschinenmodul zugeordneten Datensignalen zum Koordinieren der Maschinenmodule der Reifenaufbauanlage über das Zentralmodul.

Demnach sind vorteilhafterweise auch klar definierte Signalwege vorgesehen, die den jeweiligen Maschinenmodulen zugeordnet sind, so dass bei einem Austausch eines Maschinenmoduls die Signalwege zu den anderen Maschinenmodule nicht beeinträchtigt werden. Vielmehr wird ein Datennetzwerk aufgebaut, das modular erweitert oder angepasst werden kann. Dadurch können eine hohe Flexibilität und ein modularer Aufbau ermöglicht werden.

Vorzugsweise ist weiterhin vorgesehen, dass die Modul-Datenleitungen eines oder mehreren Maschinenmodule über einen Knotenpunkt mit einer Einheits-Datenleitung verbunden ist und die Einheits-Datenleitung mit der Zentral-Datenschnittstelle des Zentralmoduls verbunden ist.

Demnach sind die Modul-Datenleitungen einzelner oder alle Maschinenmodule mittelbar mit dem Zentralmodul verbunden, so dass einzelne Datenleitungen, die Einheits-Datenleitungen, zumindest bereichsweise zur Datenübertragung von mehreren Maschinenmodulen genutzt werden kann. Dadurch kann die Anzahl an Datenleitungen verringert werden. Dennoch ist für jedes Maschinenmodul zumindest für einen gewissen Bereich eine eigene Modul-Datenleitung bis zum jeweiligen Knotenpunkt vorgesehen, so dass jedes Maschinenmodul separat aus dem ausgebildeten Datennetzwerk abgekoppelt bzw. eingekoppelt werden kann, ohne dass dadurch die Datenübertragung zu den anderen Maschinenmodulen beeinflusst wird.

Vorzugsweise ist weiterhin vorgesehen, die Modul-Datenleitung lösbar mit der Modul-Datenschnittstelle und/oder der Zentral-Datenschnittstelle und/oder der Einheits-Datenleitung verbunden ist. Demnach kann beispielsweise durch eine Buchse/Stecker-Verbindung zwischen den jeweiligen Leitungen und Schnittstellen eine einfache Austauschbarkeit von einzelnen Maschinenmodulen aber auch eine einfache Erweiterbarkeit der Reifenaufbauanlage gewährleistet werden. Dazu können beispielsweise Switches oder Verteiler mit mehreren Buchsen als Schnittstellen oder Knotenpunkte vorgesehen sein, in die je nach Anzahl an Maschinenmodulen weitere Modul-Datenleitungen eingesteckt werden können. Dadurch kann das Datennetzwerk in einfacher Weise erweitert oder angepasst werden.

Vorzugsweise ist dabei vorgesehen, dass die Datensignale seriell zwischen dem Zentralmodul und den jeweiligen Maschinenmodulen übertragen werden. Dadurch kann die Anzahl an Leitungen sowie der Aufwand für die Datenübertragung insgesamt vereinfacht werden. Auch eine Erweiterbarkeit des Datennetzwerkes ist einfacher möglich. Grundsätzlich ist aber auch eine parallele Übertragung der Datensignale über mehrere Leitungen möglich.

Vorzugsweise ist weiterhin vorgesehen, dass die Modul-Datenschnittstelle und/oder die Zentral-Datenschnittstelle als Ethernet-Datenschnittstellen ausgebildet sind. Damit wird eine standardisierte Schnittstelle bereitgestellt, die eine einfache und sichere Übertragung von Daten in bekannter Weise ermöglicht, wobei als Datenleitungen auch standardisierte Leitungen verwendet werden können, die eine hohe Datenübertragungsrate ermöglichen.

Vorzugsweise ist außerdem vorgesehen, dass eines oder mehrere der Maschinenmodule Zuführeinheiten sind zum Zuführen von Reifenaufbaukomponenten über ein Förderband und/oder einen Roboterarm als Funktionseinheiten. Weiterhin kann zumindest eines der Maschinenmodule eine Reifenaufbaueinheit zum Aufbauen des Reifens aus mehreren Reifenaufbaukomponenten mit einer Reifenaufbautrommel als Funktionseinheit und/oder eine Reifenformeinheit zum Formen des aufgebauten Reifens mit einer Heizpresse als Funktionseinheit und/oder eine Entnahmeeinheit zum Entnehmen des fertiggestellten Reifens mit einem Förderband und/oder einem Roboterarm als Funktionseinheit sein. Damit ist eine hohe Individualisierbarkeit der Reifenaufbauanlage gegeben, wobei diese Maschinenmodule individuell entnommen, gewartet, ausgetauscht oder ersetzt werden können, ohne dass der Betrieb der anderen Maschinenmodule dadurch beeinträchtigt wird.

Es können auch weitere Maschinenmodule vorgesehen sein. Auch können die einzelnen Maschinenmodule weitere Komponenten aufweisen, die dem jeweiligen Maschinenmodul zugeordnet sind und die durch deren Anordnung am Maschinenmodul durch den Betrieb der anderen Maschinenmodule nicht beeinträchtigt werden. Als weitere Komponenten kommen beispielsweise Anzeige- und Bedienpaneele oder Eingabepaneele in Frage.

In einem erfindungsgemäße Verfahren zum Aufbauen eines Reifens, wobei der Reifen in mehreren Funktionsschritten unter Verwendung mehrerer Maschinenmodule einer Reifenaufbauanlage aufgebaut wird, wobei die Funktionsschritte jeweils durch Funktionseinheiten in den Maschinenmodulen durchgeführt werden, und jede Funktionseinheit durch eine dem jeweiligen Maschinenmodul zugeordnete Modul-Steuereinheit gesteuert wird, und ein Zentralmodul über Datensignale mit den Modul-Steuereinheiten kommuniziert, ist vorgesehen, dass jedes Maschinenmodul autark, insbesondere energieautark, und unabhängig von den anderen Maschinenmodulen der Reifenaufbauanlage sowie koordiniert von dem Zentralmodul in Abhängigkeit der Datensignale betrieben wird.

Es ist dabei vorgesehen, dass jedes Maschinenmodul über eine Modul-Datenleitung in ein Datennetzwerk der Reifenaufbauanlage eingebunden ist und das Zentralmodul die Maschinenmodule über das Datennetzwerk ansteuert, wobei das Zentralmodul bei einem Entfernen eines Maschinenmoduls aus dem Datennetzwerk und/oder bei einem NeuEinbinden eines Maschinenmoduls in das Datennetzwerk jedes einzelne Maschinenmodul in Abhängigkeit der im Datennetzwerk eingebundenen Maschinenmodule ansteuert und koordiniert. Damit ist eine einfache Erweiterbarkeit oder Austauschbarkeit der Reifenaufbauanlage gegeben, da das Zentralmodul in einfacher Weise nur die im Datennetzwerk befindlichen Maschinenmodule zu berücksichtigen hat.

Die Erfindung wird im Folgenden anhand eines Ausführungsbeispiels näher erläutert. Es zeigt:

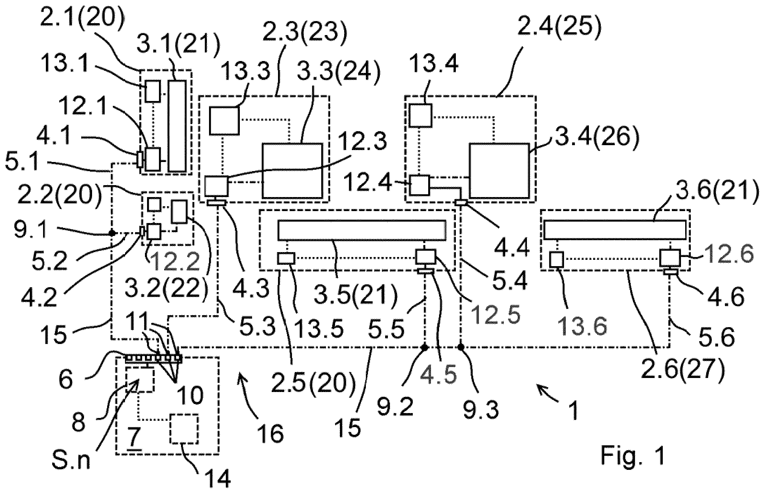

- Fig. 1: eine schematische Ansicht einer Reifenaufbauanlage.

Gemäß Figur 1 ist eine Reifenaufbauanlage 1 in einer stark schematisierten Ansicht dargestellt, mit der ein Reifen (nicht dargestellt) in mehreren Funktionsschritten aufgebaut werden kann. Die Reifenaufbauanlage 1 ist dabei modular aufgebaut, d. h. die Reifenaufbauanlage 1 weist eine bestimmte Anzahl n an Maschinenmodulen 2.n auf. Jedes Maschinenmodul 2.n ist in der Reifenaufbauanlage 1 für eine bestimmte Funktion zuständig und weist demnach eine bestimmte Funktionseinheit 3.n auf, mit der ein bestimmter Funktionsschritt zum Aufbauen des Reifens durchgeführt werden kann. Die schematische Ansicht gemäß Figur 1 zeigt hierbei lediglich andeutungsweise, wie die einzelnen Maschinenmodule 2.n bzw. Funktionseinheiten 3.n innerhalb der Reifenaufbauanlage 1 zueinander angeordnet sein können.

Einige der Maschinenmodule 2.1, 2.2, 2.5 können beispielsweise als Zuführeinheiten 20 ausgebildet sein, die als Funktionseinheiten 3.1, 3.2, 3.5 jeweils Förderbänder 21 oder Roboterarme 22 aufweisen, die dafür sorgen, dass eine bestimmte Reifenaufbaukomponente (Gürtellagen, Cordeinlagen, Lauffläche, Innenschicht, Seitenwand, Kerndraht, etc.) dem Reifenaufbauprozess zugeführt oder ein Transport innerhalb des Reifenaufbauprozesses zum nächsten Maschinenmodul 2.n in der Prozesskette stattfinden kann. Als weitere Maschinenmodule 2.3, 2.4 der Reifenaufbauanlage 1 kommen beispielsweise eine Reifenaufbaueinheit 23 mit einer Reifenaufbautrommel 24 als Funktionseinheit 3.3 zum Aufbauen des Reifens aus den unterschiedlichen zugeführten Komponenten (Gürtellagen, Cordeinlagen, Lauffläche, Innenschicht, Seitenwand, Kerndraht, etc.) sowie eine Reifenformeinheit 25 mit einer Heizpresse 26 als Funktionseinheit 3.4 zum Vulkanisieren des Reifens in Frage. Abschließend kann eine Entnahmeeinheit 27 mit einem Förderband 21 oder einem Roboterarm 22 als Funktionseinheit 3.6 vorgesehen sein, um den fertiggestellten Reifen (green tire) zu entnehmen. Damit sind eine Reihe von Funktionseinheiten 3.n vorgesehen, die vorzugsweise jeweils einem Maschinenmodul 2.n zugeordnet sind, um einen bestimmten Funktionsschritt im Reifenaufbauprozess durchzuführen.

Weiterhin weist jedes Maschinenmodul 2.n eine eigene Modul-Datenschnittstelle 4.n auf, an die jeweils eine Modul-Datenleitung 5.n angeschlossen ist. Über die Modul-Datenleitung 5.n können Datensignale S.n übertragen werden, wobei über die jeweilige Modul-Datenschnittstelle 4.n Datensignale S.n sowohl empfangen als auch gesendet werden können. Die Modul-Datenschnittstelle 4.n ist demnach vorzugsweise eine Eingabe/Ausgabe-Schnittstelle. Die Modul-Datenleitungen 5.n laufen an einer Zentral-Datenschnittstelle 6 eines Zentralmoduls 7 zusammen.

Das Zentralmodul 7 ist ausgebildet, Datensignale S.n von den einzelnen Maschinenmodulen 2.n zu empfangen und weiterzuverarbeiten bzw. auch zu erzeugen und auszugeben. Demnach ist auch die Zentral-Datenschnittstelle 6 eine Eingabe/Ausgabe-Schnittstelle. Das Zentralmodul 7 dient hierbei als Zentralsteuerung der Reifenaufbauanlage 1, die die einzelnen Maschinenmodule 2.n koordiniert. Dies findet durch eine Zentral-Steuereinheit 8 im Zentralmodul 7 statt, die die Datensignale S.n erzeugen und/oder verarbeiten und an die einzelnen Maschinenmodule 2.n ausgeben kann.

Die Datensignale S.n werden wie beschrieben über die einzelnen Modul-Datenleitungen 5.n an das jeweilige Maschinenmodul 2.n übermittelt oder von dem jeweiligen Maschinenmodul 2.n empfangen, wobei vorzugsweise eine serielle Datenübertragung über ein bestimmtes standardisiertes Protokoll, z.B. Ethernet, mit entsprechendem Aufbau der jeweiligen Modul-Datenleitung 5.n vorgesehen ist. Dadurch können die Modul-Datenleitungen 5.n einzelner Maschinenmodule 2.n zumindest bereichsweise auch zusammengelegt werden. Beispielsweise können wie in Figur 1 dargestellt, Knotenpunkte 9.i vorgesehen sein, an denen die Modul-Datenleitungen 5.n von mindestens zwei Maschinenmodulen 2.n zusammenlaufen. Ausgehend von dem Knotenpunkt 9.i werden die von den jeweiligen Maschinenmodulen 2.n ausgegebenen Datensignale S.n über eine Einheits-Datenleitung 15 zur Zentral-Datenschnittstelle 6 am Zentralmodul 7 übertragen. Dazwischen können auch weitere Knotenpunkte 9.i vorgesehen sein, an die eine oder mehrere weitere Modul-Datenleitungen 5.n von weiteren Maschinenmodulen 2.n oder weitere Einheits-Datenleitungen 15 angeschlossen sind. Es kann allerdings auch vorgesehen sein, dass jede Modul-Datenleitung 5.n einzeln in Sternform an die Zentral-Datenschnittstelle 6 angeschlossen ist.

Die Zentral-Datenschnittstelle 6 kann beispielsweise in Form einer standardisierten Ethernet-Datenschnittstelle ausgebildet sein, die entsprechende standardisierte Buchsen 10 aufweist, in die standardisierte Stecker 11 der Modul-Datenleitungen 5.n bzw. der Einheits-Datenleitungen 15 eingesteckt werden können. Die Knotenpunkte 9.i können entsprechend ebenfalls standardisierte Buchsen 10 aufweisen, so dass zwischen den einzelnen Modul-Datenschnittstellen 4.n und der Zentral-Datenschnittstelle 6 über die Modul-Datenleitungen 5.n, ggf. die Einheits-Datenleitungen 15 sowie die Knotenpunkte 9.i ein Datennetzwerk 16 aufgebaut wird, über das das Zentralmodul 7 die einzelnen Maschinenmodule 2.n koordinieren kann.

Aufgrund der Modul-Datenleitungen 5.n und dem Buchse/Stecker-Aufbau innerhalb des Datennetzwerkes 16 ist es in einfacher Weise möglich, dass jedes einzelne Maschinenmodul 2.n auch nachträglich in dem Datennetzwerk 16 hinzugefügt oder entfernt werden kann. Dadurch wird ein modularer Aufbau der Reifenaufbauanlage 1 erreicht. Das Zentralmodul 7 kann über dieses modulare Datennetzwerk 16 dann Datensignale S.n, die dem jeweiligen an das Datennetzwerk 16 angeschlossenen Maschinenmodul 2.n zugeordnet sind, empfangen und verarbeiten und/oder auch Datensignale S.n erzeugen und ausgeben, um ein bestimmtes Maschinenmodul 2.n im Datennetzwerk 16 zu steuern.

Um dieses modulare Gesamtkonzept zu erweitern, ist weiterhin vorgesehen, dass jedes Maschinenmodul 2.n seine eigene Modul-Steuereinheit 12.n aufweist, die im oder am Maschinenmodul 2.n selbst angeordnet ist. Die Modul-Steuereinheit 12.n ist ausgebildet, die Datensignale S.n, die dem jeweiligen Maschinenmodul 2.n zugeordnet sind und die über das Datennetzwerk 16 übertragen werden, zu verarbeiten. In Abhängigkeit davon kann dann von der Modul-Steuereinheit 12.n die Funktionseinheit 3.n des jeweiligen Maschinenmoduls 2.n angesteuert werden. Gleichzeitig können Datensignale S.n von der jeweiligen Modul-Steuereinheit 12.n erzeugt und über die jeweilige Modul-Datenleitung 5.n zum Zentralmodul 7 ausgegeben werden, so dass die Zentral-Steuereinheit 8 diese entsprechend verarbeiten kann.

Damit wird in jedem Maschinenmodul 2.n eine eigenständige Modul-Steuereinheit 12.n bereitgestellt, die das Maschinenmodul 2.n ansteuern kann, um die darin integrierte Funktionseinheit 3.n in Abhängigkeit des entsprechenden Datensignals S.n zu betreiben. Da ein Datenaustausch zwischen den Modul-Steuereinrichtungen 12.n und der Zentralmodul-Steuereinrichtung 8 erfolgt, ist ein von dem Zentralmodul 7 koordiniertes Betreiben der gesamten Reifenaufbauanlage 1 möglich.

Die Modularität der Reifenaufbauanlage 1 wird außerdem dadurch erweitert, dass jedes Maschinenmodul 2.n sowie auch das Zentralmodul 7 jeweils über eine eigene Modul-Energieversorgung 13.n bzw. Zentral-Energieversorgung 14 verfügen. Dadurch kann gewährleistet werden, dass jedes Modul 2.n, 7 autark für sich funktionieren kann. Bei einem Ausfall einer der Modul-Energieversorgungen 13.n können die nicht betroffenen Maschinenmodule 2.n auch weiterhin von ihren jeweiligen Steuereinheiten 12.n angesteuert werden, so dass deren Funktionsfähigkeit weiterhin sichergestellt ist. Das Zentralmodul 7 kann den Ausfall auch feststellen und die nicht betroffenen Maschinenmodule 2.n bzw. deren Modul-Steuereinheiten 12.n entsprechend angepasst über die Datensignale S.n ansteuern.

Auch bei einem Austausch eines einzelnen Maschinenmoduls 2.n im Rahmen einer Reparatur oder eines Upgrades können die anderen verbleibenden Maschinenmodule 2.n über das Zentralmodul 7 weiterhin für sich betrieben werden. Auch bei einem Neu-Einbau eines vorher nicht vorgesehenen Maschinenmoduls 2.n, beispielsweise bei einer Anpassung des Reifenaufbauprozesses, ist dieses nicht mit einer bestehenden Energieversorgung 13.n zu verbinden, da das neu eingefügt Maschinenmodul 2.n über eine eigene Modul-Energieversorgung 13.n verfügt.

Auch weitere nicht dargestellte Komponenten, die ausschließlich dem jeweiligen Maschinenmodul 2.n zugeordnet sind, beispielsweise Anzeige- und Bedienpaneele bzw. Eingabepaneele, sind im oder am jeweiligen Maschinenmodul 2.n selbst angeordnet.

Insgesamt kann durch einen solchen modularen Aufbau der Reifenaufbauanlage 1, wie er in Figur 1 gezeigt ist, eine hohe Flexibilität erreicht werden. Demnach können einzelne Maschinenmodule 2.n in einfacher Weise aus der Reifenaufbauanlage 1 bzw. dem Datennetzwerk 16 entfernt werden, indem die Anbindung des jeweiligen Maschinenmoduls 2.n über die Modul-Datenleitungen 5.n getrennt wird, beispielsweise durch Abklemmen der Modul-Datenleitung 5.n von der Modul-Datenschnittstelle 4.n, dem Knotenpunkt 9.i oder der Zentral-Datenschnittstelle 6. Dadurch werden die anderen Maschinenmodule 2.n in ihrer Funktion nicht beeinträchtigt, da diese autark weiterbetrieben werden können und über das Datennetzwerk 16 auch weiterhin von dem Zentralmodul 7 angesteuert werden können.

Nachfolgend kann in einfacher Weise ein neu bereitgestelltes Maschinenmodul 2.n, beispielsweise ein repariertes, aufgerüstetes (Upgrade) oder neu im Reifenaufbauprozess vorgesehenes Maschinenmodul 2.n, über dessen Modul-Datenschnittstelle 4.n wieder einfach in das Datennetzwerk 16 der Reifenaufbauanlage 1 integriert werden. Nach dem Einbinden des neu eingefügten Maschinenmoduls 2.n über dessen Modul-Datenleitung 5.n in da Datennetzwerk 16 kann im Zentralmodul 7 bzw. in der Zentral-Steuereinrichtung 8 eine entsprechende Initialisierungs-Routine durchlaufen werden, mit der das neu hinzugefügte Maschinenmodul 2.n in die Reifenaufbauanlage 1 funktionell integriert wird.

Dabei kann entsprechend festgelegt werden, welche Aufgabe und Funktion das neue Maschinenmodul 2.n übernimmt und wie dieses in den Reifenaufbauprozess eingebunden wird. Ist durch das Neueinbinden ein Anpassen der Ansteuerroutine eines bestehenden Maschinenmoduls 2.n nötig, kann dies vom Zentralmodul 7 ausgehend erfolgen, indem die Datensignale S.n entsprechend angepasst erzeugt und an dieses bestehende Maschinenmodul 2.n übermittelt werden. Ein entferntes Maschinenmodul 2.n kann in der Software entsprechend ebenfalls entfernt oder als inaktiv gekennzeichnet werden und der Reifenaufbauprozess entsprechend angepasst werden. Demnach kann über die Zentral-Steuereinrichtung 8 gezielt und schnell das Neu-Einbinden und Deaktivieren von Maschinenmodulen 2.n koordiniert werden, vergleichbar zu einem Plug&Play in einem üblichen PC.

Dadurch reduziert sich die Zeit, in der sich die Reifenaufbauanlage 1 im Stillstand befindet, und damit auch der Produktionsausfall, da lediglich einzelne Maschinenmodule 2.n für sich entnommen und ausgetauscht werden können, ohne die anderen bestehenden Maschinenmodule 2.n zu beeinflussen. Das Einbinden auf Softwareebene kann durch den klar strukturierten, modularen Aufbau ebenfalls einfach und schnell erfolgen.

Bei diesem modularen Aufbau der Reifenaufbauanlage 1 werden also einzelne Maschinenmodule 2.n bereitgestellt und verwendet, die für sich autark funktionieren können und dadurch vorteilhafterweise auch außerhalb der Reifenaufbauanlage 1 bereits vorab getestet werden können. Auch nach deren Einbindung in das Datennetzwerk 16 und nach der Initialisierungs-Routine in der Zentral-Steuereinheit 8 können nachträglich noch Anpassungen funktioneller Natur über das Zentralmodul 7 oder die Modul-Steuereinheiten 12.n des jeweiligen Maschinenmoduls 2.n vorgenommen werden, ohne dass dabei der Betriebsablauf der übrigen Maschinenmodule 2.n und somit der gesamten Reifenaufbauanlage 1 an sich maßgeblich beeinträchtigt sind.

Durch die Modularität kann auch kundenseitig selbst festgelegt werden, welche Maschinenmodule 2.n bzw. welche Versionen bestimmter Maschinenmodule 2.n eingesetzt werden sollen. Beispielsweise kann in einer Reifenaufbauanlage 1 eines bestimmten Typs auf ein Upgrade von einzelnen Maschinenmodulen 2.n verzichtet werden. Des Weiteren können je nach Anwendung und Hersteller auch speziell angepasste Maschinenmodule 2.n eingesetzt werden, die dann entsprechend funktionell in diese Reifenaufbauanlage 1 eingebunden und über das Zentralmodul 7 koordiniert werden. Dadurch ist eine Erweiterbarkeit bzw. auch Individualisierbarkeit der Reifenaufbauanlage 1 in einfacher Weise auch nachträglich noch möglich.

Bei der Inbetriebnahme einer solchen Reifenaufbauanlage 1 kann zudem zunächst ein Teil der Reifenaufbauanlage 1 in Betrieb genommen werden, wobei weniger relevante Bestandteile der Reifenaufbauanlage 1 für einen Testlauf oder einen rudimentären Betrieb vorerst anderweitig ersetzt werden können, ohne dass dabei der gesamte Reifenaufbauprozess zum Erliegen kommt.

### Bezugszeichenliste

- 1: Reifenaufbauanlage
- 2.n: Maschinenmodul
- 3.n: Funktionseinheit
- 4.n: Modul-Datenschnittstelle
- 5.n: Modul-Datenleitung
- 6: Zentral-Datenschnittstelle
- 7: Zentralmodul
- 8: Zentral-Steuereinheit
- 9.i: Knotenpunkt
- 10: Buchse
- 11: Stecker
- 12.n: Modul-Steuereinheit
- 13.n: Modul-Energieversorgung
- 14: Zentral-Energieversorgung
- 15: Einheits-Datenleitung
- 16: Datennetzwerk
- 20: Zuführeinheit
- 21: Förderband
- 22: Roboterarm
- 23: Reifenaufbaueinheit
- 24: Reifenaufbautrommel
- 25: Reifenformeinheit
- 26: Heizpresse
- 27: Entnahmeeinheit
- n: Anzahl der Maschinenmodule 2.n in der Reifenaufbauanlage 1
- S.n: Datensignal

## Patentansprüche

1. Reifenaufbauanlage (1) zum Aufbauen eines Reifens in mehreren Funktionsschritten, mit mehreren Maschinenmodulen (2.n), wobei jedes Maschinenmodul (2.n) eine Funktionseinheit (3.n) aufweist zum Durchführen mindestens eines Funktionsschrittes im Reifenaufbauprozess, und jedem Maschinenmodul (2.n) eine Modul-Steuereinheit (12.n) zugeordnet ist zum Steuern der Funktionseinheit (3.n) dieses Maschinenmoduls (2.n), und einem Zentralmodul (7), das ausgebildet ist über Datensignale (S.n) mit den Modul-Steuereinheiten (12.n) der Maschinenmodule (2.n) zu kommunizieren und diese anzusteuern,
**dadurch gekennzeichnet, dass**
die Modul-Steuereinheit (12.n) in dem oder an dem jeweils zugeordneten Maschinenmodul (2.n) angeordnet ist und jedem Maschinenmodul (2.n) weiterhin eine eigene Modul-Energieversorgung (13.n) zugeordnet ist, so dass jedes Maschinenmodul (2.n) autark und/oder unabhängig von den anderen Maschinenmodulen (2.n) der Reifenaufbauanlage (1) betrieben werden kann, wobei jedes Maschinenmodul (2.n) eine eigene Modul-Datenschnittstelle (4.n) aufweist, die einerseits signalleitend mit der Modul-Steuereinheit (12.n) des Maschinenmoduls (2.n) verbunden ist und die andererseits über eine Modul-Datenleitung (5.n) mittelbar oder unmittelbar mit einer Zentral-Datenschnittstelle (6) des Zentralmoduls (7) verbunden ist zum Senden und/oder Empfangen von dem jeweiligen Maschinenmodul (2.n) zugeordneten Datensignalen (S.n) zum Koordinieren der Maschinenmodule (2.n) der Reifenaufbauanlage (1) über das Zentralmodul (7).

2. Reifenaufbauanlage (1) nach Anspruch 1,
**dadurch gekennzeichnet, dass**
Modul-Datenleitungen (5.n) eines oder mehreren Maschinenmodule (2.n) über einen Knotenpunkt (9.i) mit einer Einheits-Datenleitung (15) verbunden ist und die Einheits-Datenleitung (15) mit der Zentral-Datenschnittstelle (6) des Zentralmoduls (7) verbunden ist.

3. Reifenaufbauanlage (1) nach Anspruch 1 oder 2,
**dadurch gekennzeichnet, dass**
die Modul-Datenleitung (5.n) lösbar mit der Modul-Datenschnittstelle (4.n) und/oder der Zentral-Datenschnittstelle (6) und/oder der Einheits-Datenleitung (15) verbunden ist.

4. Reifenaufbauanlage (1) nach einem der vorhergehenden Ansprüche,
**dadurch gekennzeichnet, dass**
die Datensignale (S.n) seriell zwischen dem Zentralmodul (7) und den jeweiligen Maschinenmodulen (2.n) übertragen werden.

5. Reifenaufbauanlage (1) nach einem der vorhergehenden Ansprüche,
**dadurch gekennzeichnet, dass**
die Modul-Datenschnittstelle (4.n) und/oder die Zentral-Datenschnittstelle (6) als Ethernet-Datenschnittstellen ausgebildet sind.

6. Reifenaufbauanlage (1) nach einem der vorhergehenden Ansprüche,
**dadurch gekennzeichnet, dass**
eines oder mehrere der Maschinenmodule (2.n) Zuführeinheiten (20) sind zum Zuführen von Reifenaufbaukomponenten über ein Förderband (21) und/oder einen Roboterarm (22) als Funktionseinheiten (3.n).

7. Reifenaufbauanlage (1) nach einem der vorhergehenden Ansprüche,
**dadurch gekennzeichnet, dass**
zumindest eines der Maschinenmodule (2.n) eine Reifenaufbaueinheit (23) ist zum Aufbauen des Reifens aus mehreren Reifenaufbaukomponenten mit einer Reifenaufbautrommel (24) als Funktionseinheit (3.n).

8. Reifenaufbauanlage (1) nach einem der vorhergehenden Ansprüche,
**dadurch gekennzeichnet, dass**
zumindest eines der Maschinenmodule (2.n) eine Reifenformeinheit (25) ist zum Formen des aufgebauten Reifens mit einer Heizpresse (26) als Funktionseinheit (3.n).

9. Reifenaufbauanlage (1) nach einem der vorhergehenden Ansprüche,
**dadurch gekennzeichnet, dass**
zumindest eines der Maschinenmodule (2.n) eine Entnahmeeinheit (27) ist zum Entnehmen des fertiggestellten Reifens mit einem Förderband (21) und/oder einem Roboterarm (22) als Funktionseinheit (3.n).

10. Verfahren zum Aufbauen eines Reifens, wobei der Reifen in mehreren Funktionsschritten unter Verwendung mehrerer Maschinenmodule (2.n) einer Reifenaufbauanlage (1) aufgebaut wird, wobei die Funktionsschritte jeweils durch Funktionseinheiten (3.n) in den Maschinenmodulen (2.n) durchgeführt werden, und jede Funktionseinheit (3.n) durch eine dem jeweiligen Maschinenmodul (2.n) zugeordnete Modul-Steuereinheit (12.n) gesteuert wird, und ein Zentralmodul (7) über Datensignale (S.n) mit den Modul-Steuereinheiten (12.n) kommuniziert,
**dadurch gekennzeichnet, dass**
jedes Maschinenmodul (2.n) autark, insbesondere energieautark, und unabhängig von den anderen Maschinenmodulen (2.n) der Reifenaufbauanlage (1) sowie koordiniert von dem Zentralmodul (7) in Abhängigkeit der Datensignale (S.n) betrieben wird, wobei jedes Maschinenmodul (2.n) über eine Modul-Datenleitung (5.n) in ein Datennetzwerk (16) der Reifenaufbauanlage (1) eingebunden ist und das Zentralmodul (7) die Maschinenmodule (2.n) über das Datennetzwerk (16) mit den Datensignalen (S.n) ansteuert, wobei das Zentralmodul (7) bei einem Entfernen eines Maschinenmoduls (2.n) aus dem Datennetzwerk (16) und/oder bei einem NeuEinbinden eines Maschinenmoduls (2.n) in das Datennetzwerk (16) jedes einzelne Maschinenmodul (2.n) in Abhängigkeit der im Datennetzwerk (16) eingebundenen Maschinenmodule (2.n) ansteuert und koordiniert.

## Claims

1. Tyre building system (1) for building a tyre in a plurality of functional steps, having a plurality of machine modules (2.n), each machine module (2.n) comprising a functional unit (3.n) for performing at least one functional step in the tyre building process, and each machine module (2.n) being assigned a module control unit (12.n) for controlling the functional unit (3.n) of this machine module (2.n), and having a central module (7), which is designed to communicate via data signals (S.n) with the module control units (12.n) of the machine modules (2.n) and to activate them,
**characterized in that**
the module control unit (12.n) is arranged in or on the respectively assigned machine module (2.n) and each machine module (2.n) is also assigned its own module power supply (13.n), so that each machine module (2.n) can be operated autonomously and/or independently of the other machine modules (2.n) of the tyre building system (1), each machine module (2.n) having its own module data interface (4.n), which on the one hand is connected in a signal-conducting manner to the module control unit (12.n) of the machine module (2.n) and which on the other hand is indirectly or directly connected via a module data line (5.n) to a central data interface (6) of the central module (7) for sending and/or receiving data signals (S.n), assigned by the respective machine module (2.n), for coordinating the machine modules (2.n) of the tyre building system (1) via the central module (7).

2. Tyre building system (1) according to Claim 1,
**characterized in that**
module data lines (5.n) of one or more machine modules (2.n) are connected via a node point (9.i) to a unified data line (15) and the unified data line (15) is connected to the central data interface (6) of the central module (7).

3. Tyre building system (1) according to Claim 1 or 2,
**characterized in that**
the module data line (5.n) is detachably connected to the module data interface (4.n) and/or the central data interface (6) and/or the unified data line (15).

4. Tyre building system (1) according to one of the preceding claims,
**characterized in that**
the data signals (S.n) are transmitted serially between the central module (7) and the respective machine modules (2.n).

5. Tyre building system (1) according to one of the preceding claims,
**characterized in that**
the module data interface (4.n) and/or the central data interface (6) are formed as Ethernet data interfaces.

6. Tyre building system (1) according to one of the preceding claims,
**characterized in that**
one or more of the machine modules (2.n) are feeding units (20) for feeding tyre building components via a conveyor belt (21) and/or a robot arm (22) as functional units (3.n).

7. Tyre building system (1) according to one of the preceding claims,
**characterized in that**
at least one of the machine modules (2.n) is a tyre building unit (23) for building the tyre from a plurality of tyre building components, having a tyre building drum (24) as a functional unit (3.n).

8. Tyre building system (1) according to one of the preceding claims,
**characterized in that**
at least one of the machine modules (2.n) is a tyre moulding unit (25) for moulding the built tyre, having a heating press (26) as a functional unit (3.n).

9. Tyre building system (1) according to one of the preceding claims,
**characterized in that**
at least one of the machine modules (2.n) is a removal unit (27) for removing the completed tyre, having a conveyor belt (21) and/or a robot arm (22) as a functional unit (3.n).

10. Method for building a tyre, the tyre being built in a plurality of functional steps by using a plurality of machine modules (2.n) of a tyre building system (1), the functional steps being respectively performed by functional units (3.n) in the machine modules (2.n), and each functional unit (3.n) being controlled by a module control unit (12.n) assigned to the respective machine module (2.n), and a central module (7) communicating via data signals (S.n) with the module control units (12.n),
**characterized in that**
each machine module (2.n) is operated autonomously, in particular powered autonomously, and independently of the other machine modules (2.n) of the tyre building system (1) in a manner coordinated by the central module (7) in dependence on the data signals (S.n), each machine module (2.n) being incorporated via a module data line (5.n) in a data network (16) of the tyre building system (1) and the central module (7) activating the machine modules (2.n) with the data signals (S.n) via the data network (16), the central module (7) activating and coordinating each individual machine module (2.n) in dependence on the machine modules (2.n) incorporated in the data network (16) whenever a machine module (2.n) is removed from the data network (16) and/or whenever a machine module (2.n) is newly incorporated into the data network (16).

## Revendications

1. Installation de confection de pneumatique (1) destinée à confectionner un pneumatique en plusieurs étapes fonctionnelles, comprenant plusieurs modules de machine (2.n), chaque module de machine (2.n) comportant une unité fonctionnelle (3.n) destinée à exécuter au moins une étape fonctionnelle dans le processus de confection de pneumatique, et une unité de commande de module (12.n) destinée à commander l'unité fonctionnelle (3.n) dudit module de machine (2.n) étant associée à chaque module de machine (2. n), et comprenant un module central (7) conçu pour communiquer avec les unités de commande de module (12.n) des modules de machine (2.n) par l'intermédiaire de signaux de données (S.n) et pour commander ces derniers,
**caractérisée en ce que**
l'unité de commande de module (12.n) est agencée dans ou sur le module de machine (2.n) respectivement associé et à chaque module de machine (2.n) est en outre associée sa propre alimentation en énergie de module (13.n), de telle sorte que chaque module de machine (2.n) peut fonctionner de manière autonome et/ou indépendamment des autres modules de machine (2.n) de l'installation de confection de pneumatique (1), chaque module de machine (2.n) comportant sa propre interface de données de module (4. n) qui, d'une part, est reliée par conduction de signaux à l'unité de commande de module (12.n) du module de machine (2.n) et qui, d'autre part, est reliée directement ou indirectement par l'intermédiaire d'une ligne de données de module (5.n) à une interface de données centrale (6) du module central (7) de façon à émettre et/ou à recevoir des signaux de données (S.n) associés au module de machine (2.n) respectif pour coordonner les modules de machine (2.n) de l'installation de confection de pneumatique (1) par l'intermédiaire du module central (7).

2. Installation de confection de pneumatique (1) selon la revendication 1,
**caractérisée en ce que**
des lignes de données de module (5.n) d'un ou de plusieurs modules de machine (2.n) sont reliées par l'intermédiaire d'un point nodal (9.i) à une ligne de données d'unité (15) et **en ce que** la ligne de données d'unité (15) est reliée à l'interface de données centrale (6) du module central (7).

3. Installation de confection de pneumatique (1) selon la revendication 1 ou 2,
**caractérisée en ce que**
la ligne de données de module (5.n) est reliée de manière amovible à l'interface de données de module (4.n) et/ou à l'interface de données centrale (6) et/ou à la ligne de données d'unité (15).

4. Installation de confection de pneumatique (1) selon l'une quelconque des revendications précédentes,
**caractérisée en ce que**
les signaux de données (S.n) sont transmis en série entre le module central (7) et les modules de machine (2.n) respectifs.

5. Installation de confection de pneumatique (1) selon l'une quelconque des revendications précédentes,
**caractérisée en ce que**
l'interface de données de module (4.n) et/ou l'interface de données centrale (6) sont conçues sous la forme d'interfaces de données Ethernet.

6. Installation de confection de pneumatique (1) selon l'une quelconque des revendications précédentes,
**caractérisée en ce que**
l'un ou plusieurs des modules de machine (2.n) sont des unités d'acheminement (20) destinées à acheminer des composants de confection de pneumatique par l'intermédiaire d'une bande transporteuse (21) et/ou d'un bras de robot (22) en tant qu'unités fonctionnelles (3.n).

7. Installation de confection de pneumatique (1) selon l'une quelconque des revendications précédentes,
**caractérisée en ce que**
l'un au moins des modules de machine (2.n) est une unité de confection de pneumatique (23) destinée à confectionner le pneumatique à partir de plusieurs composants de confection de pneumatique au moyen d'un tambour de confection de pneumatique (24) en tant qu'unité fonctionnelle (3.n).

8. Installation de confection de pneumatique (1) selon l'une quelconque des revendications précédentes,
**caractérisée en ce que**
l'un au moins des modules de machine (2.n) est une unité de moulage de pneumatique (25) destinée à mouler le pneumatique assemblé au moyen d'une presse chauffante (26) en tant qu'unité fonctionnelle (3.n).

9. Installation de confection de pneumatique (1) selon l'une quelconque des revendications précédentes,
**caractérisée en ce que**
l'un au moins des modules de machine (2.n) est une unité de prélèvement (27) destinée à prélever le pneumatique fini au moyen d'une bande transporteuse (21) et/ou un bras de robot (22) en tant qu'unité fonctionnelle (3.n).

10. Procédé destiné à confectionner un pneumatique, dans lequel le pneumatique est confectionné en plusieurs étapes fonctionnelles à l'aide de plusieurs modules de machine (2.n) d'une installation de confection de pneumatique (1), les étapes fonctionnelles étant respectivement exécutées par des unités fonctionnelles (3.n) dans les modules de machine (2.n), et chaque unité fonctionnelle (3.n) étant commandée par une unité de commande de module (12.n) associée au module de machine (2.n) respectif, et un module central (7) communiquant avec les unités de commande de module (12.n) par l'intermédiaire de signaux de données (S.n),
**caractérisé en ce que**
chaque module de machine (2.n) fonctionne de manière autonome, en particulier de manière autonome en énergie, et indépendamment des autres modules de machine (2.n) de l'installation de confection de pneumatique (1) et de manière coordonnée par le module central (7) en fonction des signaux de données (S.n), chaque module de machine (2.n) étant intégré par l'intermédiaire d'une ligne de données de module (5.n) dans un réseau de données (16) de l'installation de confection de pneumatique (1) et le module central (7) commandant les modules de machine (2. n) par l'intermédiaire du réseau de données (16) au moyen des signaux de données (S.n), le module central (7), lorsqu'un module de machine (2.n) est retiré du réseau de données (16) et/ou lorsqu'un module de machine (2.n) est à nouveau intégré dans le réseau de données (16), commandant et coordonnant chaque module de machine (2.n) individuel en fonction des modules de machine (2.n) intégrés dans le réseau de données (16).
